# EUROPÄISCHE PATENTSCHRIFT

(11) **EP 2 493 736 B1**
(45) Veröffentlichungstag und Bekanntmachung des Hinweises auf die Patenterteilung: **20.07.2016**
(21) Anmeldenummer: 10768451.6
(22) Anmeldetag: 11.10.2010
(51) Int. Cl.: B60T 17/18, B60T 17/22

(54) **VERFAHREN ZUR FUNKTIONSÜBERWACHUNG EINER VAKUUMPUMPE IN EINEM BREMSSYSTEM**
METHOD FOR THE FUNCTIONAL MONITORING OF A VACUUM PUMP IN A BRAKING SYSTEM
PROCÉDÉ POUR LA SURVEILLANCE DU FONCTIONNEMENT D'UNE POMPE À VIDE D'UN SYSTÈME DE FREINAGE

(30) Priorität: 26.10.2009 DE 102009046006
(43) Veröffentlichungstag der Anmeldung: 05.09.2012
(73) Patentinhaber: Robert Bosch GmbH, 70442 Stuttgart (DE)
(72) Erfinder: KRUEGER, Hartmut, 77830 Buehlertal (DE); DAMM, Peter, Hagenau 67500 (FR); WEIDINGER, Karl, 76534 Baden-Baden (DE)
(86) Internationale Anmeldenummer: PCT/EP2010/065169
(87) Internationale Veröffentlichungsnummer: WO 2011/054623

(56) Entgegenhaltungen:
- WO-A1-02/14132
- WO-A1-93/11983
- DE-A1- 19 929 880
- US-A- 4 738 112
- US-A- 5 658 131

## Beschreibung

Die Erfindung bezieht sich auf ein Verfahren zur Funktionsüberwachung einer Vakuumpumpe in einem Bremssystem.

### Stand der Technik

Elektrische Vakuumpumpen werden in Bremssystemen mit pneumatischen Bremskraftverstärkern eingesetzt, um in einer Kammer des Bremskraftverstärkers einen Unterdruck zu erzeugen. Der Differenzdruck zwischen der mit Unterdruck beaufschlagten Kammer und einer zweiten Kammer in Bremskraftverstärker, die unter Umgebungsdruck steht, dient zur Bremskraftunterstützung. Derartige Bremskraftverstärker mit zusätzlicher Vakuumpumpe werden insbesondere bei Fahrzeugen mit Dieselmotoren sowie bei Nutzfahrzeugen eingesetzt.

Für die Aufrechterhaltung der Bremskraftverstärkung auch über längere Betriebszeiträume ist die Funktionstüchtigkeit der Vakuumpumpe entscheidend. Auf Grund der begrenzten Lebensdauer von elektrischen Vakuumpumpen ändert sich infolge von Verschleiß mit zunehmender Laufleistung die Leistungsfähigkeit der Pumpe, wodurch die Bremskraftverstärkung verschlechtert wird.

Aus der WO 02/14132 A1 ist es bekannt, die Funktionstüchtigkeit der Vakuumpumpe eines Bremskraftverstärkers zu überwachen, indem der Anfangsdruck und der Enddruck in einem Unterdruckspeicher bei Betätigung der Vakuumpumpe bestimmt und die Differenz zwischen End- und Anfangsdruck mit einem Grenzwert verglichen wird. Der Enddruck wird nach einem definierten Zeitintervall im Unterdruckspeicher bestimmt.

Die DE 199 29 880 A1 offenbart ein Verfahren zur Funktionsüberwachung einer Vakuumpumpe, die beispielsweise in Bremskraftverstärkern von Fahrzeugen eingesetzt wird. Das Verfahren beruht auf einer Überwachung der Druckschwellen, wobei auch die Änderung des Unterdrucks, also der Gradient überwacht werden kann und ein Fehlersignal erzeugt wird, wenn die Druckänderung nicht einem Erwartungswert entspricht.

### Offenbarung der Erfindung

Der Erfindung liegt die Aufgabe zu Grunde, die Funktion einer Vakuumpumpe, die zur Erzeugung eines Unterdrucks in einem Bremskraftverstärker eines Bremssystems eingesetzt wird, zu überwachen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren zur Funktionsüberwachung einer elektrischen Vakuumpumpe wird in Bremssystemen von Fahrzeugen eingesetzt, die einen pneumatischen Bremskraftverstärker aufweisen, wobei über die Betätigung der Vakuumpumpe auf der Unterdruckseite des Bremskraftverstärkers ein Unterdruck erzeugt wird. Die Vakuumpumpe wird im Betrieb zwischen einem Einschaltdruck, der eine erste Druckschwelle darstellt, und einem Ausschaltdruck, der eine zweite Druckschwelle bezeichnet, betätigt. Diese Druckschwellen kennzeichnen einen Evakuierungszeitraum, in welchem das Medium in der Unterdruckkammer des Bremskraftverstärkers evakuiert und hierdurch ein Unterdruck erzeugt wird.

Zur Funktionsüberwachung der Vakuumpumpe wird der Evakuierungszeitraum zwischen dem Einschaltdruck und dem Ausschaltdruck bestimmt und mit einem Referenzzeitraum verglichen, wobei für den Fall, dass der Evakuierungszeitraum den Referenzzeitraum übersteigt, ein Fehlersignal erzeugt wird. Der Referenzzeitraum stellt eine Vergleichsgröße dar, die insbesondere als Funktion aktueller Umgebungs- und/oder Fahrzeugbedingungen bestimmt wird und somit nicht zwingenderweise als feste, sondern vorzugsweise als eine veränderliche Größe vorliegt. Grundsätzlich möglich ist aber auch ein fester, unveränderlicher Wert für den Referenzzeitraum. Über den Vergleich zwischen dem tatsächlich benötigten Evakuierungszeitraum, welcher erforderlich ist, um den Druck vom höheren Einschaltdruck auf den niedrigeren Ausschaltdruck zu reduzieren, und dem Referenzzeitraum kann zuverlässig auf die Funktionstüchtigkeit der elektrischen Vakuumpumpe geschlossen werden. Übersteigt der Evakuierungszeitraum den Referenzzeitraum, so muss von einer Funktionsbeeinträchtigung der Vakuumpumpe ausgegangen werden, woraufhin ein Fehlersignal erzeugt wird, das in geeigneter Weise weiterverarbeitet wird. Liegt dagegen der Evakuierungszeitraum innerhalb des Referenzzeitraums, so ist von einer hinreichenden Funktionstüchtigkeit der elektrischen Vakuumpumpe auszugehen.

Diese Verfahrensweise hat den Vorteil, dass über den Vergleich von Evakuierungszeitraum mit dem Referenzzeitraum ein einfach handzuhabendes Kriterium bereit steht, das in zuverlässiger Weise für die Beurteilung der Funktionstüchtigkeit herangezogen werden kann. Die Funktionsüberwachung kann im laufenden Betrieb durchgeführt werden, in welchem für die Bereitstellung des gewünschten Unterdrucks in dem Bremskraftverstärker die elektrische Vakuumpumpe betätigt wird; es ist dagegen grundsätzlich nicht erforderlich, die Vakuumpumpe zusätzlich zu ihrer regulären Betätigung in Gang zu setzen. Vorteilhaft ist es außerdem, dass die Festlegung des Referenzzeitraums flexibel durchgeführt werden kann, so dass verschiedene aktuelle Zustands- und Umgebungsgrößen berücksichtigt werden können.

Der Referenzzeitraum, der zum Vergleich mit dem Evakuierungszeitraum herangezogen wird, bestimmt sich gemäß vorteilhafter Ausführung in Abhängigkeit der Versorgungsspannung, welche an die elektrische Vakuumpumpe angelegt wird. Die Versorgungsspannung stammt aus dem Bordnetz des Fahrzeugs, in das das Bremssystem integriert ist, und kann Schwankungen unterworfen sein, die beispielsweise auf die zeitgleiche Betätigung mehrerer leistungsintensiver Verbraucher im Fahrzeug zurückzuführen sind. Auf Grund der Schwankungen in der Versorgungsspannung kann auch bei vollständiger Funktionstüchtigkeit der Vakuumpumpe ein längerer oder kürzerer Evakuierungszeitraum für das Erzeugen eines gewünschten Unterdrucks erforderlich sein, was über den an die Versorgungsspannung anzupassenden Referenzzeitraum berücksichtigt wird.

Des Weiteren ist es möglich, den Referenzzeitraum in Abhängigkeit der Temperatur entweder eines Bauteils im Bremssystem, insbesondere der Vakuumpumpe, und/oder der Umgebungstemperatur zu bestimmen. Auch die Temperatur kann die Evakuierungscharakteristik der Vakuumpumpe beeinflussen.

Zusätzlich oder alternativ kann auch der Atmosphären- bzw. Umgebungsdruck bei der Bestimmung des Referenzzeitraums berücksichtigt werden, um die Qualität der Funktionsüberwachung der Vakuumpumpe zu verbessern. Auch eine Änderung des Umgebungsdrucks beeinflusst das Evakuierungsverhalten der Pumpe. Da der Unterdruck im Bremskraftverstärker üblicherweise über einen Differenzdrucksensor ermittelt wird, der keine Aussage über den absoluten Umgebungsdruck zulässt, wird der Umgebungsdruck zweckmäßigerweise über ein zusätzliches Sensorsignal insbesondere eines Absolutdrucksensors bestimmt. Der Absolutdrucksensor muss nicht zwingender Weise Bestandteil des Bremssystems sein, grundsätzlich genügt es, wenn die Information eines im Fahrzeug befindlichen Drucksensors über die üblichen Datenkanäle einem Regel- bzw. Steuergerät zugeführt wird, in welchem das Verfahren zur Funktionsüberwachung der Vakuumpumpe abläuft.

Der Referenzzeitraum bestimmt sich zweckmäßigerweise aus einem Referenzkennfeld, in welchem der Druckverlauf des von der Vakuumpumpe erzeugbaren Unterdrucks als Funktion der Versorgungsspannung der Vakuumpumpe sowie der Zeit darstellbar ist. Grundsätzlich möglich ist aber auch ein entsprechender funktionaler Zusammenhang. Die Berücksichtigung der Abhängigkeit des Referenzzeitraums von der Temperatur und/oder vom Umgebungsdruck erfolgt vorzugsweise über Korrekturterme, über die der Referenzzeitraum angepasst wird, welcher im Referenzkennfeld oder in dem funktionalen Zusammenhang bestimmt wird.

Zweckmäßigerweise wird die Ermittlung des Evakuierungszeitraums nur durchgeführt, wenn das Bremspedal nicht betätigt wird, um eine weitere Abhängigkeit des Druck-Kennfelds von einer Verringerung des bei der Bremspedalbetätigung zu evakuierenden Volumens auszuschließen. Die Zeitmessung zwischen den zwei Druckpunkten bzw. -Schwellen erfolgt zweckmäßigerweise vielmehr erst dann, wenn keine Bremspedalbetätigung mehr vorliegt.

Gemäß einer alternativen Ausführung kann aber auch während einer Bremspedalbetätigung der Evakuierungszeitraum bestimmt werden. In diesem Fall wird zweckmäßigerweise der Druckverlauf in Abhängigkeit des sich verringernden Volumens in der Unterdruckkammer des Bremskraftverstärkers bestimmt, beispielsweise mittels eines Korrekturterms.

Die Bestimmung, ob aktuell das Bremspedal betätigt wird, erfolgt beispielsweise über ein Signal eines Bremslichtschalters im Fahrzeug, der an die Betätigung des Bremspedals gekoppelt ist. Über die Auswertung des Signals des Bremslichtschalters kann auf die Betätigung des Bremspedals geschlossen werden.

Auch die Druckschwellen, also der Einschaltdruck und/oder der Ausschaltdruck, die den Evakuierungszeitraum begrenzen, können entweder als feste Grenzen oder als vom aktuellen Zustand abhängige Werte bestimmt werden. Im letztgenannten Fall bestimmen sich der Einschaltdruck und/oder der Ausschaltdruck als Funktion eines aktuellen Fahrzugstandes und/oder der Umgebungsbedingungen wie z.B. die Umgebungstemperatur und Umgebungsdruck. Als aktueller Fahrzustand kommen alle Fahrzeugzustandsgrößen sowie Fahrzeugkenngrößen diverser Aggregate im Fahrzeug, insbesondere des Bremssystems in Betracht.

Sofern bei der Überprüfung eine Funktionsstörung der Vakuumpumpe festgestellt und demzufolge ein Fehlersignal erzeugt wird, kann die Weiterverarbeitung des Fehlersignals auf verschiedene Arten erfolgen. So ist es beispielsweise möglich, das Fehlersignal in einer Speichereinheit abzuspeichern, ohne darüber hinaus zusätzliche Maßnahmen zu ergreifen. Diese Vorgehensweise bietet sich insbesondere bei verhältnismäßig geringen Leistungsverlusten der Vakuumpumpe an, die sich nur in einem geringfügig verlängerten Evakuierungszeitraum niederschlagen. Aus der Speichereinheit kann das Fehlersignal bei Bedarf ausgelesen werden, insbesondere im Rahmen von Wartungsarbeiten. Sofern mehrere Fehlersignale vorliegen, können ggf. weiter Maßnahmen ergriffen werden.

Des Weiteren ist es möglich, das Fehlersignal in Form eines Warnsignals an den Fahrer auszugeben, um den Fahrer auf die Funktionsstörung hinzuweisen.

Schließlich ist es auch möglich, beim Vorliegen eines Fehlersignals zusätzliche Sicherungsmaßnahmen zu ergreifen, um den Leistungsverlust der Vakuumpumpe und damit einhergehend den geringeren Unterdruck zumindest teilweise zu kompensieren. Beispielsweise wird im Falle eines Fehlersignals eine hydraulische Bremsanlage im Fahrzeug aktiviert, um über den hydraulischen Bremsvorgang ein reduziertes Bremsmoment auszugleichen, das auf der geringeren Bremskraftunterstützung in Folge des Leistungsverlustes der Vakuumpumpe beruht.

Im Falle eines Hybridfahrzeugs, welches einen Verbrennungsmotor sowie mindestens einen Elektromotor als Antriebseinheiten aufweist, kann es zweckmäßig sein, für die Dauer der Funktionsstörung eine ausschließlich elektrische Fahrweise zu deaktivieren, um einen permanenten Betrieb des Verbrennungsmotors zu gewährleisten und den Verbrennungsmotor als Vakuumquelle für die Evakuierung des Bremskraftverstärkers nutzen zu können.

Gemäß eines weiteren Aspektes der Erfindung wird das Drucksignal des Bremskraftverstärkers bei nicht betätigtem Bremspedal sowie bei nicht laufender Vakuumpumpe ausgewertet, wobei ein Druckverlust im Drucksignal auf eine im System befindliche Leckage, insbesondere in der Vakuumpumpe schließen lässt.

Das Verfahren zur Funktionsüberwachung der Vakuumpumpe läuft in einem Regel- bzw. Steuergerät ab, welches insbesondere Bestandteil eines Bremssystems in einem Fahrzeug ist.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Bremssystems in einem Fahrzeug, mit einem pneumatischen Bremskraftverstärker, dem eine elektrische Vakuumpumpe zugeordnet ist,
- Fig. 2: ein Blockschaltdiagramm zur Durchführung des Verfahrens zur Funktionsüberwachung der Vakuumpumpe.

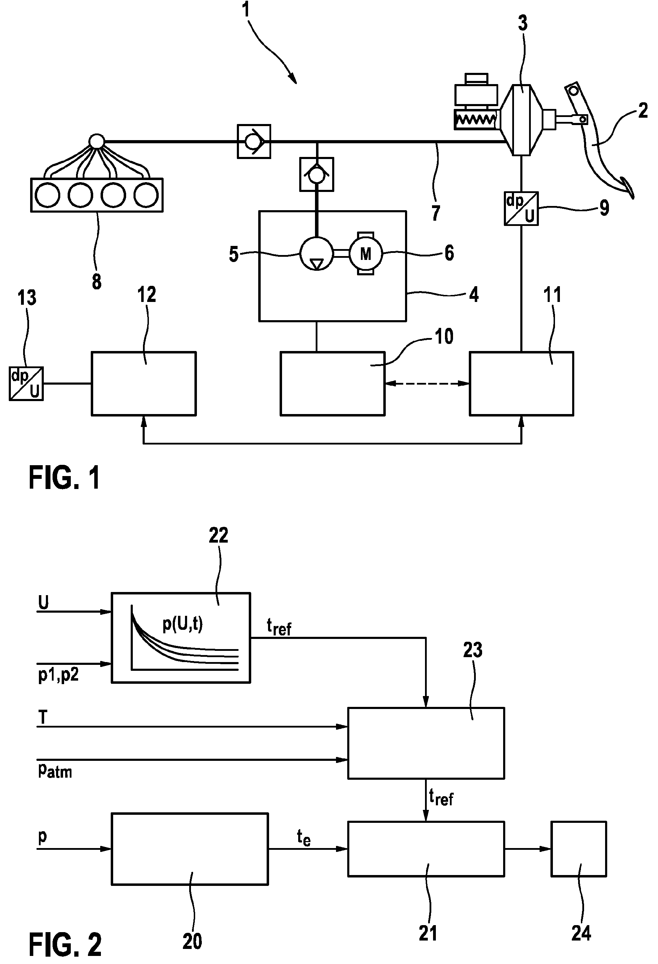

In Fig. 1 ist ein Bremssystem 1 dargestellt, welches in ein Fahrzeug integriert ist, wobei das Bremssystem 1 über ein Bremspedal 2 zu betätigen ist, das mit einem pneumatischen Bremskraftverstärker 3 gekoppelt ist. Dem pneumatischen Bremskraftverstärker 3 ist eine elektrische Vakuumpumpe 4 zugeordnet, die eine Pumpeneinheit 5 sowie einen Elektromotor 6 zum Antrieb der Pumpeneinheit 5 aufweist. Die Vakuumpumpe 4 ist über eine Druckleitung 7 mit der Unterdruckkammer des Bremskraftverstärkers 3 verbunden. Im Betrieb der Vakuumpumpe 4 wird die Unterdruckkammer des Bremskraftverstärkers 3 evakuiert, hierdurch wird eine Bremskraftverstärkung zur Unterstützung des Bremsvorganges erzielt.

Dargestellt ist in Fig. 1 eine Brennkraftmaschine bzw. ein Verbrennungsmotor 8, der als Antriebseinheit des Fahrzeuges dient und dessen Ansaugtrakt über eine weitere Leitung mit der Druckleitung 7 und damit auch mit der Unterdruckkammer des Bremskraftverstärkers 3 verbunden ist. Über diese Verbindung kann die Druckreduzierung in der Unterdruckkammer des Bremskraftverstärkers 3 zumindest teilweise auch über den Verbrennungsmotor 8 erzeugt werden. Insbesondere bei einem Ausfall oder bei reduzierter Leistungsfähigkeit der Vakuumpumpe 4 ist auf diese Weise ein Mindest-Unterdruck im Bremskraftverstärker 3 gewährleistet.

Der Druck in der Unterdruckkammer des Bremskraftverstärkers wird mithilfe eines Differenzdrucksensors 9 bestimmt, der den Differenzdruck zwischen der Unterdruckkammer und einer weiteren Kammer im Bremskraftverstärker 3 angibt, welche insbesondere mit Atmosphären- bzw. Umgebungsdruck pₐₜₘ beaufschlagt ist.

Der Vakuumpumpe 4 ist ein Regel- bzw. Steuergerät 10 zugeordnet, in welchem zum einen Stellsignale für die Vakuumpumpe 4 erzeugt und zum anderen eine Funktionsüberwachung der Vakuumpumpe durchgeführt wird. Das Regel- bzw. Steuergerät 10 ist entweder direkt oder über einen Datenkanal im Fahrzeug, insbesondere eine CAN-Bus mit weiteren Regel- bzw. Steuergeräten 11 und 12 verbunden, wobei es sich bei dem Gerät 11 um ein ESP-Steuergerät (Elektronisches Stabilitätsprogramm) und bei dem Gerät 12 um ein Motorsteuergerät handelt. Dem Motorsteuergerät 12 ist ein Absolutdrucksensor 13 zugeordnet, über den der absolute Umgebungsdruck pₐₜₘ bestimmt werden kann. Über den Datenkanal steht der Absolutdruck pₐₜₘ auch dem Regel- bzw. Steuergerät 10 zur Verfügung, welches der Vakuumpumpe 4 zugeordnet ist.

Im Blockschaltdiagramm gemäß Fig. 2 ist der Verfahrensablauf zur Funktionsüberwachung der Vakuumpumpe dargestellt. In einem Block 20 erfolgt die Messung des Druckverlaufs p auf der Saugseite der Vakuumpumpe, wobei der Druck p dem Unterdruck in der Unterdruckkammer des Bremskraftverstärkers 3 entspricht. Der Druckverlauf p wird mithilfe des Differenzdrucksensors 9 gemessen, wobei die Messung zwischen zwei Druckschwellenwerten erfolgt, nämlich einem höheren Einschaltdruck p₁ und einem niedrigeren Ausschaltdruck p₂. Der Zeitraum, der für die Evakuierung der Unterdruckkammer vom Einschaltdruck p₁ auf den Ausschaltdruck p₂ benötigt wird, wird als Evakuierungszeitraum tₑ bezeichnet.

Im nachfolgenden Block 21 erfolgt ein Vergleich des gemessenen Evakuierungszeitraums tₑ zwischen den Druckschwellenwerten p₁ und p₂ mit einem Referenzzeitraum t_{ref}, der aus einem Block 22 stammt, welcher ein Referenzkennfeld p(U,t) enthält. Bei dem Referenzkennfeld handelt es sich um das Druckreferenzkennfeld, das von der Versorgungsspannung U sowie der Zeit t abhängt. Dem Block 22 werden als Eingangsgrößen die aktuelle Versorgungsspannung U zugeführt, welche aus dem Bordnetz des Fahrzeugs für die Vakuumpumpe zur Verfügung steht, sowie die Druckschwellenwerte p₁ und p₂. Mit diesen Eingangsgrößen lässt sich in dem Referenzkennfeld ein Referenzzeitraum t_{ref} bestimmen. Dieser Referenzzeitraum t_{ref} wird als Eingangsgröße einem weiteren, zwischengeschalteten Block 23 zugeführt, der als weitere Eingangsgröße die Temperatur T sowie den Umgebungsdruck pₐₜₘ aufweist. Bei der Temperatur T handelt es sich um die Temperatur Tᵥ der Vakuumpumpe sowie ggf. auch die Umgebungstemperatur Tₐₜₘ. Beide Temperaturwerte können ebenso wie der Umgebungsdruck pₐₜₘ in dem Block 23 zur Korrektur des Referenzzeitraums t_{ref} herangezogen werden, so dass als Ausgangsgröße am Block 23 ein korrigierter Referenzzeitraum t_{ref} anliegt, der als Eingangsgröße und Vergleichsgröße in dem Block 21 zum Vergleich mit dem gemessenen Evakuierungszeitraum tₑ zur Verfügung steht.

Ergibt der Vergleich im Block 21, dass der Evakuierungszeitraum tₑ den Referenzzeitraum t_{ref} übersteigt, so muss von Funktionsuntüchtigkeit oder zumindest von einer eingeschränkten Funktionalität der Vakuumpumpe ausgegangen werden. In diesem Fall wird in einem nachfolgenden Block 24 ein Fehlersignal erzeugt, das entweder in einer Speichereinheit abgespeichert, dem Fahrer zur Anzeige gebracht oder zum Auslösen von Sicherungsmaßnehmen herangezogen wird. Als Sicherungsmaßnahme wird beispielsweise ein selbsttätiger hydraulischer Bremsvorgang ausgelöst, der unterstützend wirkt. Möglich ist es auch, im Falle eines Hybridantriebs, der neben dem Verbrennungsmotor auch mindestens einen Elektromotor als Antriebseinheit aufweist, eine rein elektrische Fahrweise zu unterbinden, um einen permanenten Betrieb des Verbrennungsmotors und damit eine Unterdruckbeaufschlagung der Unterdruckkammer des Bremskraftverstärkers sicherzustellen.

## Patentansprüche

1. Verfahren zur Funktionsüberwachung einer Vakuumpumpe in einem Bremssystem, wobei die Vakuumpumpe (4) zwischen einem Einschaltdruck (p₁) und einem Ausschaltdruck (p₂) zur Erzeugung eines Unterdrucks betätigt wird, der Evakuierungszeitraum (tₑ) zwischen dem Einschaltdruck (p₁) und dem Ausschaltdruck (p₂) bestimmt und mit einem Referenzzeitraum (t_{ref}) verglichen wird und für den Fall, dass der Evakuierungszeitraum (tₑ) den Referenzzeitraum (t_{ref}) übersteigt, ein Fehlersignal erzeugt wird, **dadurch gekennzeichnet, dass** der Referenzzeitraum (t_{ref}) in Abhängigkeit der Versorgungsspannung (U) bestimmt wird.

2. Verfahren nach Anspruch 1, **dadurch gekennzeichnet, dass** der Referenzzeitraum (t_{ref}) in Abhängigkeit der Vakuumpumpentemperatur (Tᵥ) und/oder der Umgebungstemperatur (Tₐₜₘ) bestimmt wird.

3. Verfahren nach einem der Ansprüche 1 bis 2, **dadurch gekennzeichnet, dass** der Referenzzeitraum (t_{ref}) in Abhängigkeit des Umgebungsdrucks (pₐₜₘ) bestimmt wird.

4. Verfahren nach einem der Ansprüche 1 bis 3, **dadurch gekennzeichnet, dass** der Referenzzeitraum (t_{ref}) aus einem Referenzkennfeld (p(U,t)) bestimmt wird.

5. Verfahren nach einem der Ansprüche 1 bis 4, **dadurch gekennzeichnet, dass** die Ermittlung des Evakuierungszeitraums (tₑ) nur durchgeführt wird, wenn das Bremspedal (2) nicht betätigt wird.

6. Verfahren nach einem der Ansprüche 1 bis 5, **dadurch gekennzeichnet, dass** die Betätigung des Bremspedals (2) über das Signal eines Bremslichtschalters bestimmt wird.

7. Verfahren nach einem der Ansprüche 1 bis 6, **dadurch gekennzeichnet, dass** der Einschaltdruck (p₁) und/oder der Ausschaltdruck (p₂) als Funktion eines aktuellen Fahrzustandes und/oder von Umgebungsbedingungen bestimmt werden.

8. Verfahren nach einem der Ansprüche 1 bis 7, **dadurch gekennzeichnet, dass** das Fehlersignal in einer Speichereinheit abgespeichert wird.

9. Verfahren nach einem der Ansprüche 1 bis 8, **dadurch gekennzeichnet, dass** das Fehlersignal als Warnsignal ausgegeben wird.

10. Verfahren nach einem der Ansprüche 1 bis 9, **dadurch gekennzeichnet, dass** im Falle eines Fehlersignals zusätzliche Sicherungsmaßnahmen ergriffen werden.

11. Verfahren nach Anspruch 10, **dadurch gekennzeichnet, dass** im Falle eines Fehlersignals eine hydraulische Bremsanlage aktiviert wird.

12. Verfahren nach Anspruch 10 oder 11, **dadurch gekennzeichnet, dass** im Falle eines Fehlersignals bei einem Hybridfahrzeug eine ausschließlich elektrische Fahrweise unterbunden wird.

13. Verfahren nach einem der Ansprüche 1 bis 12, **dadurch gekennzeichnet, dass** bei Nichtbetätigung des Bremspedals (2) und nicht laufender Vakuumpumpe (4) der Druck (p) im Bremssystem (1) bestimmt und im Falle einer signifikanten Druckverringerung ein Fehlersignal erzeugt wird.

14. Regel- bzw. Steuergerät zur Durchführung des Verfahrens nach einem der Ansprüche 1 bis 13.

15. Bremssystem in einem Fahrzeug mit einem Regel- bzw. Steuergerät (10) nach Anspruch 14.

## Claims

1. Method for the functional monitoring of a vacuum pump in a brake system, wherein the vacuum pump (4) is activated between a switch-on pressure (p₁) and a switch-off pressure (p₂) to generate a partial vacuum, the evacuation time period (tₑ) between the switch-on pressure (p₁) and the switch-off pressure (p₂) is determined and is compared with a reference time period (t_{ref}), and in the event of the evacuation time period (tₑ) exceeding the reference time period (t_{ref}) a fault signal is generated, **characterized in that** the reference time period (t_{ref}) is determined as a function of the supply voltage (U).

2. Method according to Claim 1, **characterized in that** the reference time period (t_{ref}) is determined as a function of the temperature (tᵥ) of the vacuum pump and/or the ambient temperature (Tatm).

3. Method according to one of Claims 1 to 2, **characterized in that** the reference time period (t_{ref}) is determined as a function of the ambient pressure (pₐₜₘ).

4. Method according to one of Claims 1 to 3, **characterized in that** the reference time period (t_{ref}) is determined from a reference characteristic diagram (p(U,t)).

5. Method according to one of Claims 1 to 4, **characterized in that** the evacuation time period (tₑ) is acquired only if the brake pedal (2) is not activated.

6. Method according to one of Claims 1 to 5, **characterized in that** the activation of the brake pedal (2) is determined by means of the signal of a brake light switch.

7. Method according to one of Claims 1 to 6, **characterized in that** the switch-on pressure (p₁) and/or the switch-off pressure (p₂) are/is determined as a function of a current driving state and/or of ambient conditions.

8. Method according to one of Claims 1 to 7, **characterized in that** the fault signal is stored in a memory unit.

9. Method according to one of Claims 1 to 8, **characterized in that** the fault signal is output as a warning signal.

10. Method according to one of Claims 1 to 9, **characterized in that** in the event of a fault signal additional safety measures are taken.

11. Method according to Claim 10, **characterized in that** in the event of a fault signal a hydraulic brake system is activated.

12. Method according to Claim 10 or 11, **characterized in that** in the event of a fault signal in a hybrid vehicle an exclusively electric driving style is prohibited.

13. Method according to one of Claims 1 to 12, **characterized in that** in the case of non-activation of the brake pedal (2) and a vacuum pump (4) which is not running, the pressure (p) in the brake system (1) is determined, and in the event of a significant reduction in pressure a fault signal is generated.

14. Closed-loop or open-loop control device for carrying out the method according to one of Claims 1 to 13.

15. Brake system in a vehicle having a closed-loop or open-loop control device (10) according to Claim 14.

## Revendications

1. Procédé de surveillance du fonctionnement d'une pompe à vide dans un système de freinage, la pompe à vide (4) étant actionnée entre une pression de mise en marche (p₁) et une pression d'arrêt (p₂) en vue de générer une dépression, la période de mise sous vide (tₑ) entre la pression de mise en marche (p₁) et la pression d'arrêt (p₂) étant déterminée et comparée avec une période de référence (t_{ref}) et un signal de défaut étant généré dans le cas où la période de mise sous vide (tₑ) est supérieure à la période de référence (t_{ref}), **caractérisé en ce que** la période de référence (t_{ref}) est définie en fonction de la tension d'alimentation (U).

2. Procédé selon la revendication 1, **caractérisé en ce que** la période de référence (t_{ref}) est définie en fonction de la température de la pompe à vide (Tᵥ) et/ou de la température ambiante (Tₐₜₘ).

3. Procédé selon l'une des revendications 1 à 2, **caractérisé en ce que** la période de référence (t_{ref}) est définie en fonction de la pression ambiante (pₐₜₘ).

4. Procédé selon l'une des revendications 1 à 3, **caractérisé en ce que** la période de référence (t_{ref}) est définie à partir d'un diagramme caractéristique de référence (p(U, t)).

5. Procédé selon l'une des revendications 1 à 4, **caractérisé en ce que** la détermination de la période de mise sous vide (tₑ) n'est effectuée que lorsque la pédale de frein (2) n'est pas actionnée.

6. Procédé selon l'une des revendications 1 à 5, **caractérisé en ce que** l'actionnement de la pédale de frein (2) est déterminée par le biais du signal d'un commutateur de feu stop.

7. Procédé selon l'une des revendications 1 à 6, **caractérisé en ce que** la pression de mise en marche (p₁) et/ou la pression d'arrêt (p₂) sont définies en fonction d'une situation de conduite actuelle et/ou des conditions environnantes.

8. Procédé selon l'une des revendications 1 à 7, **caractérisé en ce que** le signal de défaut est enregistré dans une unité à mémoire.

9. Procédé selon l'une des revendications 1 à 8, **caractérisé en ce que** le signal de défaut est délivré sous la forme d'un signal d'alerte.

10. Procédé selon l'une des revendications 1 à 9, **caractérisé en ce que** dans le cas d'un signal de défaut, des mesures de sécurité supplémentaires sont engagées.

11. Procédé selon la revendication 10, **caractérisé en ce que** dans le cas d'un signal de défaut, un système de freinage hydraulique est activé.

12. Procédé selon la revendication 10 ou 11, **caractérisé en ce que** dans le cas d'un signal de défaut sur un véhicule hybride, un mode de conduite exclusivement électrique est inhibé.

13. Procédé selon l'une des revendications 1 à 12, **caractérisé en ce que** lorsque la pédale de frein (2) n'est pas actionnée et que la pompe à vide (4) n'est pas en fonctionnement, la pression (p) dans le système de freinage (1) est déterminée et un signal de défaut est généré dans le cas d'une diminution importante de la pression.

14. Régulateur ou contrôleur destiné à mettre en oeuvre le procédé selon l'une des revendications 1 à 13.

15. Système de freinage dans un véhicule équipé d'un régulateur ou d'un contrôleur (10) selon la revendication 14.
